Europäisches Patentamt

European Patent Office

Office européen des brevets

(11) Publication number: **0 154 746 B1**

## EUROPEAN PATENT SPECIFICATION

(45) Date of publication of patent specification: **02.12.92**  (51) Int. Cl.⁵: **B01D 61/00, C10G 73/04**

(21) Application number: **84308369.2**

(22) Date of filing: **03.12.84**

(54) **Method of recovering dewaxing aid (DWA) from mixture of wax and DWA by wax permeation through semipermeable membrane.**

(30) Priority: **12.03.84 US 588236**

(43) Date of publication of application:
**18.09.85 Bulletin 85/38**

(45) Publication of the grant of the patent:
**02.12.92 Bulletin 92/49**

(84) Designated Contracting States:
**BE DE FR GB IT NL**

(56) References cited:
**EP-A- 0 013 834**
**GB-A- 2 099 015**
**US-A- 2 064 506**
**US-A- 2 612 465**
**US-A- 4 192 732**

(73) Proprietor: **EXXON RESEARCH AND ENGI-
NEERING COMPANY
P.O.Box 390, 180 Park Avenue
Florham Park, New Jersey 07932(US)**

(72) Inventor: **Achia, Biddanda Umesh
38 York Crescent
Sarnia Ontario N75 4L4(CA)**

(74) Representative: **Somers, Harold Arnold et al
ESSO Engineering (Europe) Ltd. Patents &
Licences Mailpoint 72 Esso House Ermyn
Way
Leatherhead, Surrey KT22 8XE(GB)**

Rank Xerox (UK) Business Services

**Description**

BACKGROUND OF THE INVENTION

Waxes in wax-containing hydrocarbon oils are typically removed therefrom by chilling the oil to precipitate out the wax and then separating the solid wax particles from the dewaxed oil by some suitable separation technique, such as filtration, centrifugation or cold-setting. Industrial dewaxing processes include press dewaxing wherein the wax-containing oil, in the absence of solvent is chilled to crystallize out the wax particles which are then pressed out by means of a filter. In general, this procedure is typically practiced only with light hydrocarbon oil fractions due to viscosity limitations.

Of more general applicability are solvent dewaxing processes wherein a waxy oil is mixed with a solvent and then chilled to precipitate the wax as tiny particles or crystals thereby forming a slurry comprising solid wax particles and a solution of dewaxed oil with dewaxing solvent. This wax/oil/solvent slurry is then fed to wax separation means, usually a filter, wherein the wax is removed from the dewaxing solvent and dewaxed oil. Solvent dewaxing processes are used for heavier oil fractions such as lubricating oil fractions and deasphalted oils. Typical dewaxing solvents include low boiling point, normally gaseous autorefrigerative hydrocarbons such as propane, propylene, butane, etc., normally liquid hydrocarbons such as pentane, hexane, heptane, etc., ketones such as acetone, methyl-ethylketone (MEK), methylisobutylketone (MIBK), and mixtures thereof, halogenated hydrocarbons such as methyl chloride, methylene chloride, ethylene dichloride, etc., aromatic hydrocarbons such as benzene, toluene and xylene as well as mixtures of ketones and aromatic hydrocarbons such as MEK/toluene and acetone/benzene, mixtures of ketones with autorefrigerants, such as acetone/propylene and mixtures of ketones and halogenated hydrocarbons such as acetone/methylene chloride.

One of the major factors tending to limit the capacity of a solvent dewaxing process is the rate of wax separation from the dewaxed oil, which in turn is strongly influenced by the crystal structure of the precipitated wax. Although the crystal structure of the precipitated wax is influenced by various operating conditions in the dewaxing process, for any given feed it is most strongly influenced by the chilling conditions. The size and crystal structure of the precipitated wax, occlusion of oil in the wax crystal and the condition of the oil left in the crystals are extremely varied and depend on the wax composition and precipitation conditions. These conditions also effect the separation rate (typically the filtration rate) of the dewaxed oil from the wax and the yield of dewaxed oil. In some cases, most notably when the waxy oil is a bright stock, the wax crystals are of an extremely fine size and not all are separated by filtration, some leaving the filter with the dewaxed oil component which creates an objectionable haze in the oil.

One method normally employed to increase the wax separation rate, increase dewaxed oil yield and minimize haze formation is to add a dewaxing aid, also commonly known as wax crystal modifiers, to the wax-containing oil prior to or during chilling.

Well-known dewaxing aids are condensation polymers of chlorinated paraffins and naphthalenes, polyalkylacrylates, polyalkylmethacrylates, α-olefin copolymers, ethylene-vinyl acetate copolymers, alkyl fumarate-vinyl acetate copolymers, polyethyleneoxides, polyvinylpyrrolidones, polyisobutylenes, polybutadienes, polystyrene-butadiene copolymers, alkali metal stearates, polyalkylene glycols, fatty acid glycerides, etc. These dewaxing aids may be used either alone or in mixtures of two or more dewaxing aids, typical examples of such mixtures being polyalkylmethacrylates and chlorinated paraffin/naphthalene condensation polymers; or polyalkylmethacrylates and ethylene-vinylacetate copolymers, etc., mixed in various proportions. In order for these dewaxing aids to be efficient in that their use reduces the amount of fine particles produced and, thereby, the wax separation (filtration) rate is increased, they should be of relatively high molecular weight and possess a broad distribution of molecular weight. Dewaxing aids having molecular weights from 1,000 to approaching or exceeding 5,000,000 have been successfully employed. These dewaxing aids are typically employed in an amount of active ingredient ranging from about 5 to 5,000 ppm of the waxy oil, preferably 50 to 2500 ppm, more preferably 100 to 500 ppm.

It has heretofore been considered standard procedure to sacrifice the dewaxing aid employed rather than recover it from the wax or dewaxed oil for recycle. This is so because the standard recovery techniques, i.e., distillation, typically are either uneconomical and/or destructive of the components employed (i.e., high temperatures degrade the dewaxing aid rendering them unsuitable for recycle and re-use).

In recent years, alternate fluid separation techniques have become available. One such method employs semipermeable membranes for hydrocarbon separation processes. These processes are often referred to as reverse osmosis, dialysis or ultrafiltration processes. In such processes, the feed comprising a mixture of at least two different hydrocarbons is brought into contact with one side of a membrane across which a pressure differential or a concentration differential exists, for a period of time sufficient to form two solutions; a permeate which passes through the membrane and a retentate. A useful review of these processes may be found in "Novel Device and Process-Design Concepts For a Large-Scale Membrane Separation of Hydrocarbon Mixtures" by Michaels, et al., Seventh world Petroleum Congress Proceedings, vol. 4, page 21 (1967).

Various membranes are also known which may be employed in reverse osmosis, dialysis or ultrafiltration processes and they include various cellulose esters including cellulose acetate, cellulose butyrate, cellulose propionate, etc., as well as cellulose ethers such as ethyl, propyl and amyl cellulose and the like. Other membrane materials include cellulose triacetate, irradiated polycarbonate, polypropylene, polyester, polyethylene, polybutadiene, polytetrafluorethylene, polystyrene, butadiene-styrene copolymers, isoprene-isobutene copolymers, polyacrylonitrile, cross-linked or vulcanized organopolysiloxanes, polypentaerythritol, ethylenepropylene copolymers, sulfonated polyarylethersulfones, polyvinyl alcohol nitrocellulose, polyisoprene, butadieneacrylonitrile copolymers, poly-2-chlorobutadiene, etc. In these membranes, the molecular weight and the content of ionic groups are such as to make the membranes insoluble in the hydrocarbon streams being treated. These membranes may be used as such or suitably modified by chemical or physical means to change their properties. For example, regenerated-cellulose which has been subjected to a series of specific pretreatment steps has been disclosed by Perry and Van Oss in Progress in Separation and Purification, vol. 3, pages 122-124, Wiley-Interscience, 1970.

BRIEF DESCRIPTION OF THE FIGURES

Figure 1 is a schematic of the dewaxing process of the instant invention employing dewaxing aid recovery and recycle using membrane separation units.

Figure 2 is a schematic of a particular dewaxing process using propane solvent and employing membrane recovery of dewaxing aid and subsequent aid recycle.

Figure 3 presents the molecular weight distribution of ACRYLOID-150, PARAFLOW-149 and a 1 to 2 mixture of the two.

DESCRIPTION OF THE INVENTION

It has now been discovered and forms the basis of this invention, that dewaxing aids can be efficiently and economically recovered from oil/wax/solvent systems in an unaltered state suitable for recycle in the dewaxing process. This is a tremendous improvement in that the wax and oil recovered no longer contain the trace amounts of dewaxing aid which they have heretofore contained and which sometimes have imparted objectionable properties, especially dark color, to waxes and dewaxed oils. Also, because of dewaxing aid recycle and reuse, less dewaxing aid is employed thereby reducing the expense of the process.

The waxy hydrocarbon oil dewaxing process, including dewaxing aid recovery comprises the steps of

(a) mixing the waxy hydrocarbon oil, with or without dewaxing or other solvent, with a dewaxing aid;

(b) chilling the mixture to form a slurry comprising solid particles of wax and a solution of dewaxed oil, solvent (if any is employed) and dewaxing aid;

(c) separating the wax particles from the dewaxed oil solution;

(d) feeding the liquefied wax stream, with or without dewaxing or other solvent, to a separation unit comprising a semipermeable membrane wherein the wax stream is separated into a retentate stream comprising the dewaxing aid and a permeate stream comprising the dewaxing aid free wax; and/or

(e) feeding the dewaxed oil stream, with or without solvent, to a separation unit comprising a semipermeable membrane wherein the dewaxed oil stream is separated into a retentate stream comprising the dewaxing aid and a permeate stream comprising a dewaxing aid free oil; and

(f) recycling the retentate streams from steps (d) and/or (e) comprising the recovered dewaxing aids to step (a).

It must be noted that steps (d) and (e) may optionally be practised either in addition to each other or in the alternative.

Further, as an additional, simultaneous step a portion of the retentate enriched in dewaxing aid can be withdrawn from the membrane separation units of steps (d) and/or (e) and be recycled to the inlet of the separation zones of steps (d) and/or (e) in combination with the appropriate wax and dewaxed oil streams.

If a dewaxing solvent is employed, it may be removed prior to the introduction of the wax and the dewaxed oil into separation zones of steps (d) and/or (e) by employing typical solvent recovery means or the solvent may be recovered after the wax and dewaxed oil have been separated from the dewaxing aid in steps (d) and/or (e).

The wax or dewaxed oil fed to the membrane separators of steps (d) or (e) may contain from 0.001 to 50% by weight dewaxing aid. Similarly the recovered wax from step (c) may contain anywhere from 0.10 to 85 wt.% residual oil, i.e., a high oil content slack wax.

The membrane separation unit recited in steps (d) and (e) may be any typical dialysis, reverse osmosis or ultrafiltration unit. When employing an ultrafiltration unit a pressure is applied to cause the selective permeation of wax and dewaxed oil through the membrane. It is clear that in the practice of this process one or a number of such separation units may be employed. The use of a number of such units, serially arranged in stages, will increase the degree of separation of the wax and oil from the dewaxing aid and will effect the concentration of the recovered dewaxing aid. It is equally clear that when one employs a number of serially disposed separation units, the units may be all of the same type or a combination of dialysis, reverse osmosis and ultrafiltration units. In the process of this invention the waxy hydrocarbon oil can be dewaxed with or without the use of any dewaxing solvent, depending on the viscosity of the waxy hydrocarbon oil being dewaxed. Certain oils, such as high boiling distillates and deasphalted oils require the use of dilution dewaxing solvents to facilitate handling, especially under reduced temperature conditions.

When a dewaxing solvent is employed any of the well known solvents are suitable. For example, there may be used at least one member selected from alkane, alkene or alkyne hydrocarbons having 2 to 10 carbon atoms in the molecule, such as ethane, propane, butane, pentane, hexane and octane or mixtures thereof. Some of these hydrocarbons are also employed as autorefrigerative solvents. Ketones containing from 3 to 6 carbons, such as acetone, dimethyl ketone, methyl ethyl ketone, methyl propyl ketone and methylisobutyl ketone and mixtures thereof may also be used. Mixtures of the ketones with at least one member selected from aromatic hydrocarbons such as benzene and toluene, e.g. methylethyl ketone/toluene or methylisobutyl ketone/toluene are also suitable. Halogenated hydrocarbons such as methyl chloride, methylene chloride and ethylene dichloride can also be used. Further, N-methylpyrrolidone and N-ethylpyrrolidone may be used as dewaxing solvents. Useful solvent combinations include mixtures of autorefrigerative and ketone solvents, such as mixtures of acetone and propylene.

Any waxy hydrocarbon oil stock, petroleum oil stock or distillate fraction thereof may be dewaxed employing the dewaxing aid recovered by the process of this invention. Illustrative but nonlimiting examples of such stocks are (a) distillate fractions that have a boiling range within the broad range of from about 500 to 1300°F (260 to 704.4°C), (b) bright stocks or deasphalted oils having an initial boiling point above about 800°F (426.7°C). Preferably, the oils are the lubricating oil fraction or transformer oil fraction. Additionally, any of these feeds may be hydrocracked prior to distilling, or deasphalting. These may come from any source such as paraffinic crudes obtained from Aramco, Kuwait, Panhandle, North Louisiana, etc., naphthenic crudes, such as Tia Juana, Coastal crudes, etc., as well as the relatively heavy feedstocks such as bright stocks having a boiling range of 1050 + °F (565 + °C) and synthetic feedstocks derived from Athabasca tar sands, coal, shale oil, etc.

The process of the instant invention can use any of the readily available semipermeable reverse osmosis, dialysis, or ultrafiltration membranes including cellulose butyrate, cellulose propionate, cellulose ethers, e.g. ethyl, propyl and amyl cellulose; cellulose triacetate, irradiated polyethylene, gum rubber, latex films, polycarbonate films, and others specified in claim 1 of this patent specification The membrane selected and employed should be inert to the oil and dewaxing aid (and dewaxing solvent if one is used) and have average pore sizes in the range of from 50 to 200nm so that the wax, dewaxed oil and any solvent used pass through the membrane while the dewaxing aid is retained. The membrane must also be resistant to the conditions employed to facilitate permeation, which conditions include creation of a concentration gradient and/or temperature gradient and/or pressure gradient.

Typically, the dewaxing aid molecules will possess large root mean square (RMS) radium of gyration compared to wax molecules which will possess RMS radium of gyration of 6-8Å (0.6 to 0.8 nm) while that of the dewaxing solvents, such as propane will be on the order of 3.1Å (0.31nm). The dewaxed oil will likewise be in the relatively small size range similar to the wax.

The RMS radius of gyration, $R_g$, of polymeric dewaxing aid macromolecules cannot be categorically stated since $R_g$ is a function of aid chemical composition, structure, molecular weight, dispersity, concentration, etc.; and also the nature of the surrounding solvent media, the conditions of temperature and pressure, etc. Illustrative examples of the effects of some of these variables on the $R_g$ of polymethylmethacrylate and polyvinylacetate are shown in Tables 1A and 1B:

EP 0 154 746 B1

TABLE 1A

| The Effects of Solvent Type and Molecular Weight on Rg and Polymethylmethacrylate[*] | | | |
|---|---|---|---|
| Solvent Ratio and Type* | | Mean Molecular Wt. (Weight Average) | Rg, RMS Radius of Gyration, $\times 10^{-10}$ m |
| 1.0 | (A) | 556,000 | 277.5 |
| 0.76 | (A/B) | 800,000 | 433.0 |
| 0.52 | (A/B) | 800,000 | 471.6 |
| 0.40 | (A/C) | 1,111,000 | 604.6 |
| 0.20 | (A/C) | 1,111,000 | 608.8 |

\* there A = Acetone, B = Benzene, C = Chloroform

+ Data selected from "Light scattering of Polymethylmethacrylate solutions in Binary Solvent Mixtures Parts I and II" by S. Fujishige & H-G. Elias, Die Micromolekulare Chemie, p. 127-144, 155 (1972).

TABLE 1B

| The Effect of Molecular Weight on Rg of Polyvinylacetate in Methyl Ethyl Ketone at 25ºK[+] | |
|---|---|
| Mean Molecular Weight (Weight Average) | Rg, RMS Radius of Gyration, $\times 10^{-10}$ m |
| 3,460,000 | 905.5 |
| 2,150,000 | 700.0 |
| 1,740,000 | 616.4 |
| 1,390,000 | 543.1 |
| 870,000 | 406.2 |

+ Data selected from "Polyvinylacetate. A light scattering and viscosity study" by A. R. Shultz presented at 124th National Meeting of the American Chemical Society in Chicago, Ill. Sept., 1953.

Thus, dewaxing aids, which may vary widely in chemical species and molecular weight distributions (<1000 to >5,000,000) and employed with different types of oils and dewaxing solvents, may be expected to have RMS radii of gyration of 50Å (5nm) to over 2000Å (200nm). The latter is possible when macromolecular chain entanglements occur.

The membranes employed will possess average pore sizes on the order of 500Å to 2000Å (50 to 200nm) so as to allow relatively unhindered permeation of the wax, oil, solvent through the membrane while restricting passage of the dewaxing aid. Preferably the average membrane pore size will be on the order of 500Å to 1000Å (50 to 100nm). Any dewaxing aid which is degraded during the dewaxing process either by exposure to elevated temperature or by shearing may not be retained by the membrane for recycle but may be passed through with the wax, oil, solvent (if any).

The membranes, as previously stated, are commercially available materials and are sold in terms of molecular weight cut-off ranges or equivalent "pore size". The "pore size" of a semipermeable membrane cannot be categorically stated for many reasons. Pore size may be too small to be measured by physical methods. Pore sizes change with temperature and with each encountered solvent saturated within the membranes due to swelling or shrinkage, etc. A common approach used in the industry is to distinguish solvents too large to diffuse through the membrane from those small enough to diffuse through it. This can be accomplished using a membrane "sizing" kit. A list of twelve standard compounds used to "size" membranes is shown in Table 2.

TABLE 2

| COMPOUNDS FOR SIZING MEMBRANES | | |
|---|---|---|
| Compound | Formula Weight | Average Pore Diameter-x0.1nm |
| Urea | 60 | 5.4 |
| Glucose | 180 | 7.2 |
| Sucrose | 312 | 8.8 |
| Raffinose | 504 | 11.2 |
| Salmine | 6,000 | 24.0 |
| Cytochrome C | 12,000 | 25.0 |
| Lysozyme | 14,000 | 31.0 |
| Myoglobin | 17,000 | 43.0 |
| Chymotrypsinogen | 25,000 | 40.0 |
| Hemoglobin | 67,000 | 55.0 |
| APO Ferritin | 480,000 | 61.0 |
| Albumin | 67,000 | 145 x 50 x 22 |

These compounds are roughly spherical in shape. The molecular weight cut-off is quoted as the formula weight of the compound which is 98% retained by the membrane. Thus, a membrane sold as having a molecular weight cut-off of from between about 6000 and 8000 will, in generally, not permit permeation of generally spherical protein molecules having a molecular weight exceeding fro about 6,000 to 8,000. Thus, one must select that membrane having a pore size such that it will provide the desired selectivity. By way of illustration, it is believed a regenerated-cellulose membrane having a molecular weight cut-off of from about 6,000 to about 8,000, has an average pore size having a diameter of roughly about 24Å (2.4nm).

Any dewaxing process employing dewaxing aids may be utilized in the process of the instant invention. Dewaxing processes most commonly practiced are those utilizing dewaxing solvents.

Solvent dewaxing processes include indirect heat exchange in a scraped-surface chiller or other heat transfer equipment wherein waxy oil, solvent and dewaxing aid at approximately the same elevated temperature are mixed in such a manner so as to effect complete and thorough solution of the oil in the solvent before being cooled or chilled. This solution is then cooled at a uniform, slow rate under conditions which avoid intense agitation of the solution as the wax precipitates out. The wax is separated from the oil by some suitable separation technique such as filtration, centrifugation, etc.

Another well-known method of solvent dewaxing involves incremental solvent addition. In this method, solvent either alone or containing the desired amount of dewaxing aid is added to the oil at several points along a chilling apparatus. Alternately, the dewaxing aid may be added to the hot waxy oil with or without solvent present. The mixture is then chilled by indirect heat exchange, causing wax crystallization to occur and the mixture thickens considerably. A first increment of solvent is introduced at this point in order to maintain fluidity, cooling continues and more wax is precipitated. A second increment of solvent is added to maintain fluidity. This process is repeated until the desired oil-wax filtration temperature is reached, at which point an additional amount of solvent is added in order to reduce the viscosity of the mixture to that desired for the filtration step. In this method the temperature of the incrementally added solvent should also be about the same as that of the wax/oil/solvent mixture. If the solvent is introduced at a lower temperature, shock chilling of the slurry occurs resulting in the formation of small and/or acicula shaped wax crystals with attendant poor filter rate.

Yet another solvent dewaxing method is the DILCHILL® (a registered service mark of Exxon Research and Engineering Company) dewaxing process, the basic concept of which is illustrated in US-A-3,773,650, the disclosures incorporated herein by reference and may be utilized in the process of the instant intention. Thus, a waxy oil, at a temperature above its cloud point, with or without dewaxing aid mixed therein, is introduced into the top of an elongated, staged cooling zone and cold dewaxing solvent with or without dewaxing aid is incrementally introduced into said zone along a plurality of stages therein while maintaining a high degree of agitation in said stages of said zone so as to achieve substantially instantaneous mixing of the solvent and wax/oil mixture as they progress through said zone. The chilling rate in the mixing zone takes place at an average of about 2°F (1.11°C) per minute to form a slurry corising solid particles of wax and a dewaxed oil solution. The slurry exits the mixing zone at some elevated temperature and is then passed through a scraped surface chiller wherein it is further cooled down to the desired temperature for wax filtration. From there, the slurry is passed to a rotary drum wax filter to separate the solid particles of wax from the dewaxed oil solution.

By the practice of the instant invention, the deaxing aid, rather than being discarded is recovered by passing the recovered wax stream through a semi-permeable separation unit having a membrane pore size such that the wax passes through the membrane to form a permeate while the dewaxing aid is retained in the retentate and/or by passing the dewaxed oil solution also through a similar semipermeable separation unit whereby the oil and solvent pass through the membrane (permeate) while the dewaxing aid is retained (retentate). The recovered dewaxing aid is recycled to the dewaxing process and is as effective as fresh dewaxing aid in improving the performance of the dewaxing process.

EMBODIMENTS OF THE PRESENT INVENTION

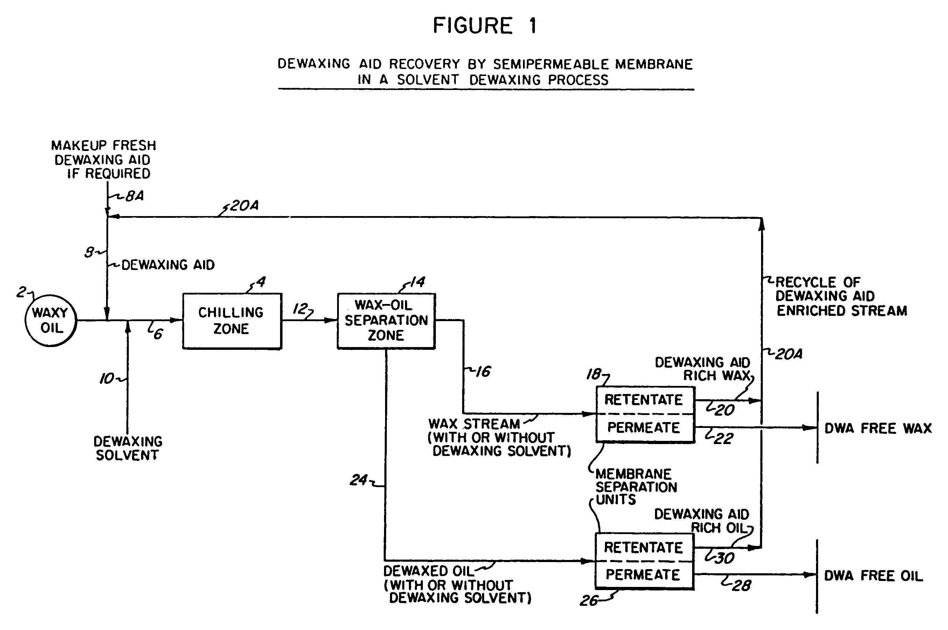

Figure 1 presents a schematic of a solvent dewaxing process utilizing a dewaxing aid and employing membrane recovery of dewaxing aid and dewaxing aid recycle.

Waxy oil from 2 is fed to chilling zone 4 via line 6. Dewaxing aid via line 8 and dewaxing solvent (if any is used) via line 10 are introduced into the waxy oil in line 6 prior to its introduction into chilling zone 4. Chilling zone 4 may be any of the previously described chilling units such as indirect refrigeration scraped-surface, shell and tube or other unit; or direct contact autorefrigeration unit, or a DILCHILL unit (details not shown). The chilled wax/dewaxed oil/dewaxing solvent slurry from chilling unit 4 is fed via line 12 to solid/liquid separation means 14 wherein the wax is separated from the dewaxed oil. (The wax may be repulped with fresh or oily solvent and fed to additional solid/liquid separation units, if desired.) The wax via line 16 is introduced into membrane separation unit 18 wherein most of the wax along with any residual dewaxed oil and/or solvent is separated from the dewaxing aid by permeation through the membrane. The dewaxing aid remains as the retentate and recovered via line 20 and 20A and recycled to dewaxing aid feed line 8. The wax, most of which permeates through the membrane is recovered as the permeate and sent via line 22 for further treatment (not shown) if needed. In similar fashion, dewaxed oil is recovered from liquid/solid separation unit 14 via line 24 and is fed to membrane separation unit 26 wherein most of the dewaxed oil, along with any solvent and entrained wax are separated from the dewaxing aid. The dewaxed oil and any wax and/or solvent permeate through the membrane and are recovered as the permeate phase via line 28 and sent for further processing (not shown) if needed. The dewaxing aid is recovered as the retentate from the unit via line 30 and is fed to line 20A which line picks up recovered dewaxing aid from line 20 (previously described) . The recovered dewaxing aid in line 20A is recycled to line 8, the dewaxing aid feed line. Should additional dewaxing aid be required, make up dewaxing aid may be added via line 8A.

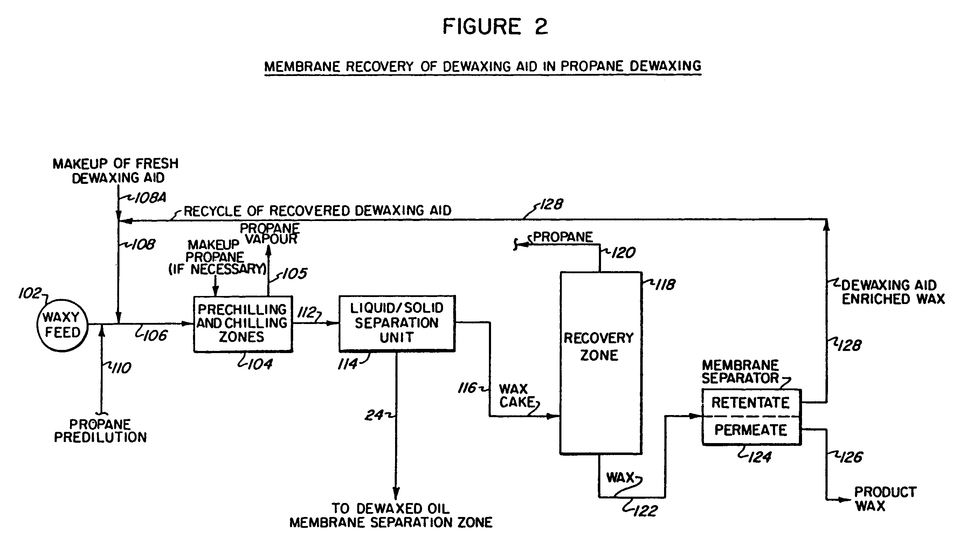

Figure 2 presents a specific embodiment of the instant process in a dewaxing process employing auto-refrigeration chilling with a light hydrocarbon solvent such as propane.

Waxy feed from 102 is fed to chilling zone 104 via line 106. Dewaxing aid line 108 and liquid propane solvent/auto-refrigerant via line 110 are fed into the waxy feed in line 106 prior to introduction into chilling zone 104. In zone 104 a portion of the propane is allowed to flash off and withdrawn in line 105, thereby autorefrigerating the mixture and precipitating the wax from the oil. Makeup propane may be added via line 107. The wax/dewaxed oil/propane solvent/dewaxing aid slurry from 104 is fed via line 112 to liquid/solid separation unit 114 wherein wax is separated from most of the dewaxed oil/propane/dewaxing aid. This wax may be repulped with fresh or oily propane and fed to additional separation units, if desired. The recovered wax is sent via line 116 to propane recovery zone 118 wherein any remaining propane is removed from the wax, the propane being recovered via line 120 for recycle (not shown) to the front end of the dewaxing process. The wax, via line 122 is sent to a membrane separation zone 124 wherein the wax permeates through the membrane and is recovered as a permeate via line 126 for further treatment (if any) not shown. Dewaxing aid is recovered as the retentate via line 128 and is recycled to dewaxing aid feed line 108 wherein, if needed, make up fresh dewaxing aid is introduced via line 108A.

The dewaxed oil is recovered from separation unit 114 via line 24 and is treated, if desired, in accordance with the procedure outline in Figure 1.

Experimental

The advantages of the instant invention will be better understood by reference to the following examples which are presented solely by way of illustration and not limitation. The recovery of dewaxing aid using a variety of membranes, waxes, oils, dewaxing aids and process conditions is demonstrated, as is the potency of the recovered dewaxing aid when recycled to a dewaxing process.

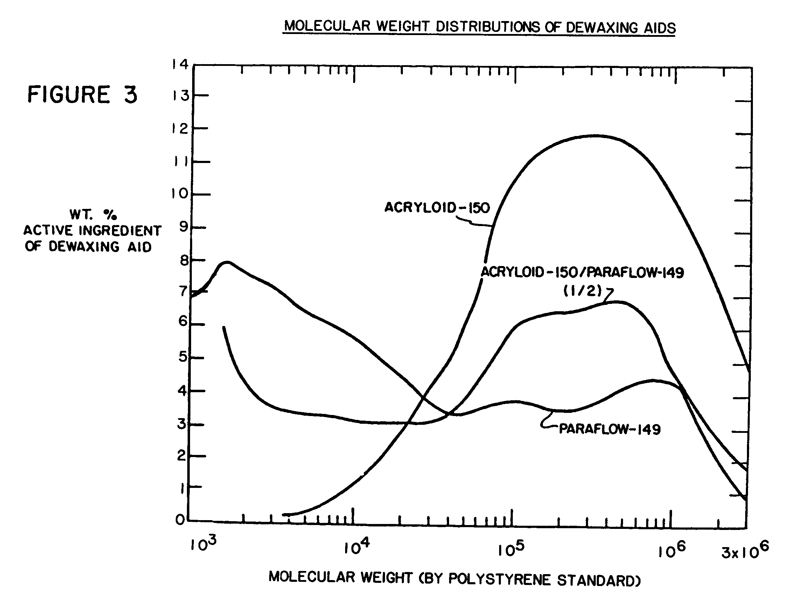

The dewaxing aids employed in all of the following examples are comprised of either pure ACRYLOID 150, a polyalkylmethacrylate commercially available from the Rohm & Haas Co., or a mixture of ACRYLOID 150 with PARAFLOW 149, a wax-naphthalene condensate polymer commercially available from the Exxon Chemical Co. These dewaxing aids were chosen because their polymeric active ingredients span a wide range of molecular weights and because of their wide-spread use in commercial dewaxing processes. Figure 3 presents the molecular weight distributions of ACRYLOID-150, PARAFLOW-149 and a 1 to 2 mixture of the two, measured by gel permeation chromatography using tetrahydrofuran carrier solvent, μ-STYRAGEL packing and calibrated against a polystyrene standard.

Example 1

1(a) Membrane Recovery of Dewaxing Aid

Slack wax and dewaxed oil (DWO) were obtained from a commercial propane dewaxing process that employed the waxy 600 Neutral distillate oil (about 600 SUS viscosity at 100°F, 37.8°C) and a dewaxing aid comprising a 1 to 2 mixture of ACRYLOID 150/PARAFLOW 149 dosed at a concentration of 0.15 wt.% on waxy feed. The wax and dewaxed oil were dialyzed using gum rubber membranes to determine the degree of recoverability of dewaxing aid from each prototypical stream.

A Soxhlet extractor commonly used in the laboratory was employed for the dialysis. About 700 ml of hexane was placed in the solvent reservoir. The charge of either 600N oil or slack wax was placed in a gum rubber membrane cot (Sheikh brand rubber prophylactic). The membrane separation temperature was 140°F (60°C), with no differential pressure applied across the membrane. A 91.9 gram charge of 600N DWO having a pour point of -11°C (12°F) when no dewaxing aid is present was dialysed for 8 hours under the above recited conditions to give a residue (41.7 grams) and a dialysate (48.5 grams). The pour point of the residue and dialysate were both -11°C (12°F) showing that the dewaxing aid, which is a good pour point depressant, is not present to any appreciable degree in the dewaxed oil stream, as would be anticipated.

The 600N slack wax stream was likewise dialyzed under the conditions recited. Three runs were conducted, two of 7 hours and one of 15. The results are summarized below:

| Weight, grams | | | Dialysis Time hr |
|---|---|---|---|
| Charge | Residue | Dialysate | |
| 78.5 | 4.6 | 73.9 | 7 |
| 62.7 | 5.7 | 57.0 | 7 |
| 65.6 | 1.6 | 64.0 | 15 |
| 206.8 | 11.9 | 194.9 | |

The residue and the dialysate thus obtained were analyzed for the presence of high molecular weight dewaxing aid by gel permeation chromatography using tetrahydrofuran solvent. All of the high molecular weight dewaxing aid was detected in the residue (membrane retentate), with virtually no dewaxing aid in the dialysate (membrane permeate).

Example 1 (continued)

1(b) Potency Test of Recovered Dewaxing Aid

The dewaxing aid recovered as residue was tested to determine its ability to perform as an effective dewaxing aid as compared to fresh dewaxing aid.

528 grams of 600N oil was employed as the wax containing oil feed. Three laboratory propane dewaxing runs were conducted employing no aid, fresh aid and recovered aid from Example 1(a). The fresh aid was employed at 0.15 wt.% dose while the recovered aid was employed at a 0.11 wt.% dose as indicated in the following calculation.

Plant dose on feed = 0.15% wt as received

Composition PARAFLOW-149/ACRYLOID-150, 2/1, as received from manufacturer

PARAFLOW 149 active ingredient = 50% As received

ACRYLOID 150 active ingredient = 39% As received

$$\text{Dose active ingredient at } 0.15\% \text{ on feed}$$
$$= (0.15 \times 2/3 \times 0.50) + (0.15 \times 1/3 \times 0.39)$$
$$= 0.05 + 0.0195 = 0.0695 \% \text{ wt on feed}$$
$$= 0.409\% \text{ wt on dry wax}$$
$$(17\% \text{ dry wax on feed})$$

Assuming 80% of dewaxing aid is present in the slack wax,

$$\text{Wt. active ingredient} = \text{Wt. slack wax dialyzed} \times (1-\text{Oil})$$
$$\text{(Content fraction)} \quad \times .80 \times 0.00409$$
$$= 206.8 \times (1-0.55) \times 0.80 \times 0.0409 =$$
$$0.304 \text{ grams}$$

$$\text{Wt.\% active ingredient} = \frac{0.304}{528} \times 100 \times \frac{10.8}{11.9} = \underline{0.052\%}$$
$$\text{on dewaxing feed}$$

(where 10.8 g – of dialysate residue was added to 528 grams of 600 Neutral raffinate;)

$$\text{Wt.\% Aid as rcvd.:} \quad \frac{0.052}{0.0695} \times 0.15 = \underline{0.113\%}$$

Laboratory propane dewaxing tests were conducted by charging 528 grams of a waxy 600 Neutral oil feed to an autorefrigeration vessel equipped with a 6-flat-blade disc turbine stirrer. The waxy oil was prediluted with propane in a ratio of 2/1 volume basis and the mixture heated to 150°F (65.6°C). Prechilling of this charge to 85°F (29.4°C) was done at 11.6°F (6.38°C)/min with the impeller tip speed at 1000 ft (304.8m)/min. Autorefrigeration was commenced at 85°F (29.4°C), whereby propane vapor was vented from the vessel at 0.013 sm$^3$/min to provide a slurry chilling rate of 6°F (3.3°C)/minute. Makeup liquid propane of 42.1 cm$^3$/min was added to replace the propane vented. The impeller tip speed was maintained at 700 ft (213.4m)/min during autorefrigeration. The resulting wax/oil/propane slurry at -30°F (-34.4°C) was filtered using a 7.1 in$^2$ (45.81cm$^2$) fabric filter cloth and 5 psi (34.5 kPa) differential pressure to separate wax from the dewaxed oil/propane solution. The rate of filtration and DWO yield, which are measures of separation efficiency, are summarized below:

| Run No. 3153-BT600- | 2 | 1 | 3 |
|---|---|---|---|
| Dewaxing Aid | None | "Fresh" | "Recovered" |
| Dose on Feed as Recvd, wt.% | 0 | 0.15 | 0.11 (est)* |
| Feed Filter rate, m$^3$/m$^2$ day | 4.6 | 9.0 | 7.0 |
| Wax Cake Liquids/Solids, v/v | 6.5 | 3.0 | 3.3 |
| Dewaxed Oil Yield, wt.% | 53 | 70 | 67 |

* The lower dose of recovered aid gives the proportionally lower filter rate and yield.

Microscopic examination of wax crystals in the slurry show that the fresh and recovered dewaxing aids gave compact, tightly agglomerated wax structures while the no-aid wax was loosely-agglomerated, the latter giving low filter rate and low dewaxed oil yield.

## Example 2

### 2(a) Membrane Recovery of Dewaxing Aid

Slack wax, containing 31 wt.% residual oil, was obtained from a commercial propane dewaxing process that employed a waxy bright stock deasphalted oil having a viscosity of about 32 mm$^2$/s (150 SUS at 210°F (98.9°C)) and a dewaxing aid comprising entirely of ACRYLOID 150 dosed at 0.16% on waxy feed. Membrane separation conditions recited in Example 1(a) were employed, except for heptane solvent and a temperature of 185°F (85°C).

A total of 210 grams of bright stock slack wax was dialyzed in four batches for a total time of 50 hours, after which period 25.5 g of residue containing dewaxing aid was recovered.

### 2(b) Potency Test of Recovered Dewaxing Aid

The dewaxing aid recovered as residue in 2(a) was tested to determine its ability as an effective dewaxing aid as compared to no aid and fresh dewaxing aid. Dewaxing conditions and apparatus were identical to that recited in Example 2(a) except for the following:

Dewaxer Feed = Bright stock Deasphalted Oil
Dewaxing Aid = ACRYLOID 150
Propane Predilution = 2.8/l, v/v
Prechilling to 60°F (15.6°C) at 11,2°F (6.2°C)/min, 1000 ft (304.8m)/min [1]
Autorefrigeration to -30°F (-34.4°C) at 5.0°F (2.78°C)/min, 100 ft (30.5m)/min[1]
Propane/feed to filter = 2.3 to 2.4/1, v/v

The results are summarized below:

| Run No. 3153-BRBS | 1 | 2 | 6 |
|---|---|---|---|
| Dewaxing Aid | None | "Fresh" | "Recovered" |
| Dose on Feed, % as Received | 0 | 0.16 | 0.14 |
| Feed Filter rate, m$^3$/m$^2$ day | 6.0 | 10.0 | 8.3 |
| Wax Cake Liquids/Solids, v/v | 1.9 | 1.4 | 1.6 |
| Dewaxed Oil Yield, wt.% | 65.5 | 62.4 | 64.1 |
| (1) Impeller tip speed | | | |

## Example 3

1.5 grams of ACRYLOID 150 dewaxing aid was mixed with 53.5 grams of refined wax of 157-159°F (69.4-70.6°C) melting point and 45 grams of 600 Neutral dewaxed oil to produce a typical dewaxing process slack wax stream. The results of tests with unpretreated, commercially available polycarbonate membranes of different pore sizes, fitted in an ultrafiltration unit (described below) are summarized in Table 3.

The ultrafiltration cell was employed comprising a circular membrane supported on a perforated metal plate and with compartments so designed as to allow passage over the membrane surface of the liquid stream being treated and to permit collection of the permeate.

The cell had provision for heating and for the application of pressure in order to promote permeation of dewaxing aid-free liquid through the membrane.

10

## TABLE 3

### DEWAXING AID RECOVERY WITH POLYCARBONATE MEMBRANES

| Run No. | M-261 | M-259 | M-257 | M-258 | M-260 |
|---|---|---|---|---|---|
| Pore Size (Å) nm | (75) 7.5 | (150) 15 | (300) 30 | (2000) 200 | (10000) 1000 |
| Thickness, μm (mil) | - | 6 (0.3) | 6 (0.3) | 10 (0.5) | 10 (0.5) |
| **Operating Conditions** | | | | | |
| Temperature, °C | 100, 150 | 100 / 150 | 99 / 150 | 100 | 100 |
| Gauge Pressure, (psig) kPa | (400) 2758 ←——————→ | | | (100) 689.5 | (20) 138 |
| **Results** | | | | | |
| ACRYLOID in Permeate, % by wt. | - | 0.2 / 0.0 | 0.0 / 0.0 | 0.6 | 0.5 |
| ACRYLOID in Retentate, % by wt. | - | - / - | - / 0.07 | - | - |
| Flux, m³/m² day | 0 | 0.06 / 0.13 | 0.28 / 0.63 | 33 | 27 |

Membranes with large pore sizes (Runs M-258, M-260) failed to recover the ACRYLOID 150 dewaxing aid due to passage of the latter through the pores of the membrane. Further optimization of membrane pore size indicated that a membrane of 1000 Å (100nm) pore size could be successfully employed at elevated temperature and pressure to provide good permeate flux and dewaxing aid retention, shown in Table 4.

11

## TABLE 4

### OPTIMIZATION OF POLYCARBONATE MEMBRANE PORE SIZE

| Run No. | M-274 | | | M-275 | | | M-276 | | |
|---|---|---|---|---|---|---|---|---|---|
| Pore Size, (Å) nm | (500) 50 | | | (800) 20 | | | (1000) 100 | | |
| Thickness, μm (mil) | 6 (0.3) | | | 6 (0.3) | | | 6 (0.3) | | |
| **Operating Conditions** | | | | | | | | | |
| Temperature, °C | 95 | 150 | 191 | 57 | 100 | 146 | 100 | 151 | 148 |
| Gauge Pressure, (psig) kPa | (420) 2896 | (420) 2896 | (218) 1503 | (420) 2896 | (100) 689 | (100) 689 | (100) 689 | (100) 689 | (420) 2896 |
| **Results** | | | | | | | | | |
| ACRYLOID in Permeate[+], % wt. | <0.1 | 0 | 0 | ~0.4 | ~0.1 | 0 | ~0.1 | 0 | ~0.1 |
| Permeate Flux, m³/m²d | 0.10 | 0.565 | 0.84 | 0.067 | 0.25 | 0.595 | 0.34 | 0.76 | 0.89 |

[+] Aid in permeate of <0.2% is considered negligible

## Example 4

Bright stock slack wax from a commercial propane dewaxing operation employing a waxy bright stock deasphalted oil (150 SUS at 210° F, 98.9° C) and a dewaxing aid comprising a mixture of 1 to 2 ACRYLOID 150 to PARAFLOW 149 was subjected to ultrafiltration in the apparatus described in Example 3, utilizing a polycarbonate membrane having a pore size of 1000 Å (100nm). The conditions employed and results obtained are presented below:

| ULTRAFILTRATION OF 0.3% ACRYLOID-150/PARAFLOW-149 (1/2) FROM BRIGHT STOCK SLACK WAX | | |
| --- | --- | --- |
| Polycarbonate Membrane Pore(Å)nm | (1000) 100 | |
| Temperature, °C | 102 | 150 |
| Gauge Pressure,(psig) kPa | - - - - (400) 2758 - - - - | |
| Permeate Flux m$^3$/m$^2$day | ~0.11 | 0.16 |

The permeated wax, free of any dewaxing aid had a markedly improved light colour compared to the dark colour of the feed slack wax. Also, this permeated wax had no detectable quantity of dewaxing aid.

The dewaxing aid recovered as retentate was examined for potency as compared to no aid and fresh aid in dewaxing a waxy bright stock, employing apparatus and conditions recited in Example 2(b). The results are summarized:

Dewaxer Feed = Bright Stock Deasphalted Oil
Dewaxing Aid = ACRYLOID-150/PARAFLOW-149, 1/2
Cold Dilution, Propane/feed = 2.3/1 v/v

| Run No. 3153-M279- | 3 | 1 | 2 | 4 |
| --- | --- | --- | --- | --- |
| Dewaxing Aid | None | "Fresh" | "Recovered" | |
| Target Dose on Feed, % active | 0 | 0.09 | 0.09 | 0.12 |
| Feed Filter rate, m$^3$/m$^2$ day | 3.4 | 11.5 | 8.8 | 8.8 |
| Wax Cake Liquids/Solids, v/v | 3.8 | 3.3 | 3.4 | 3.6 |
| DWO yield, % wt on feed | 71.3 | 72.5 | 69.4 | 68.9 |

Example 5

Bright stock slack wax which had been subjected to recycle as a wax plug for a period of four days in a commercial propane dewaxing process was next examined. The process employed a waxy oil having a viscosity of 1000 SUS at 210°F (98.9°C) and a dewaxing aid comprising a mixture of 1 to 2 ACRYLOID 150 to PARAFLOW 149. Membrane separation of dewaxing aid from the slack wax was done by ultrafiltration in the apparatus described in Example 3 employing a polycarbonate membrane having a pore size of 1000Å (100nm) and by the application of a differential pressure of 400 psig (2758 kPa) across the membrane at 212°F (100°C). The dewaxing aid was concentrated to about 11% in 51.4 grams of retentate, starting with an initial concentration of about 0.8 wt.% in 760 grams of slack wax. The permeate flux as a function of increasing concentration of dewaxing aid in retentate is shown:

| Aid Concentration, wt.% | | Permeate Wax Flux |
| --- | --- | --- |
| Retentate | Permeate | m$^3$/m$^2$ day |
| 0.8 (feed wax) | ~0 | 0.2 |
| 5.0 | ~0 | 0.073 |
| 11.0 | ~0 | 0.053 |

No dewaxing aid was detectable in the permeate, as measured by gel permeation chromatography. Colour improvement of the permeate wax was similar to that in Example 4. The recovered dewaxing aid in retentate was examined for potency as compared to no aid and fresh aid, employing apparatus and conditions as recited in Example 2(b), the results summarized below:

Dewaxer Feed - Bright Stock Deasphalted Oil
Dewaxing Aid - ACRYLOID 150/PARAFLOW 149, 1/2

| Run No. 3602-M282- | 1 | 2 | 3 | 4 |
|---|---|---|---|---|
| Dewaxing Aid | None | Fresh | Recovered | |
| Dose on Feed, % Active | 0 | 0.09 | 0.09 | 0.12 |
| Feed Filter Rate, $m^3/m^2$ day | 3.0 | 9.5 | 8.8 | 10.2 |
| Wax Cake Liquids/Solids, v/v | 3.2 | 3.8 | 3.6 | 3.7 |
| Dewaxed Oil Yield, | 72.8 | 71.6 | 70.3 | 68.6 |
| wt.% on Feed | | | | |

The recovered dewaxing aid exhibited potency similar to fresh dewaxing aid.

Example 6

Slack wax from a commercial propane dewaxing operation, identical to Example 6 but employing a waxy, solvent-extracted 600 Neutral raffinate lube stock, was subjected to membrane ultrafiltration utilizing a polycarbonate membrane having a pore size of 1000Å (100nm). The results are presented below:

| Aid Concentration, wt.% | | Permeate Wax Flux |
|---|---|---|
| in Retentate | in Permeate | $m^3/m^2$ day |
| 0.3 (slack wax) | ~0 | 0.33 |
| 1.0 | ~0 | 0.04 |
| 2.0 | ~0 | 0.05 |
| 4.0 | ~0 | 0.05 |

Marked color improvement of the permeate was observed as in Examples 4 and 5. The recovered dewaxing aid was for potency as compared to no aid and fresh aid, employing apparatus and conditions recited in Example 1(b). The results are shown below:
Dewaxer Feed: 600 Neutral Waxy Raffinate
Dewaxing Aid: ACRYLOID 150/PARAFLOW 149, 1/2

| Run No. 3602-M283- | 2 | 3 | 4 |
|---|---|---|---|
| Dewaxing Aid | None | Fresh | Recovered |
| Dose on Feed, wt.% Active | 0 | 0.07 | 0.07 |
| Feed Filter Rate, $m^3/m^2$ day | 7.3 | 15.3 | 13.1 |
| Wax Cake Liquids/Solids, v/v | 9.0 | 2.3 | 2.3 |
| Dewaxed Oil Yield, | 40.4 | 70.6 | 69.4 |
| wt.% on Feed | | | |

The recovered dewaxing aid provided filtration rate and DWO yield comparable to fresh aid.

In all of the above examples wherein recovered DWA is compared to fresh DWA, the lower dewaxed oil yields is an "apparent" effect due to wax present in the recovered DWA. The "actual" DWO yield with recovered DWA would be higher, approaching or equaling that achieved when using fresh DWA when the additional wax added to the dewaxer feed with the recovered DWA is backed out.

In this patent specification, the following applies:
Length in inch (") is converted to cm by multiplying by 2.54
Length in feet (ft)is converted to cm by multiplying by 30.48

| 1 Angstrom unit (Å) | $1 \times 10^{-10}$ m |
|---|---|
| 1 micron | $1 \times 10^{-4}$ cm |
| 1 mil | $1 \times 10^{-3}$ inch = $2.54 \times 10^{-3}$ cm. |

EP 0 154 746 B1

Area in inch$^2$ (in$^2$) is converted to cm$^2$ by multiplying by 6.4516.

Temperature in °F is converted to °C by subtracting 32 and then dividing by 1.8.

Gauge pressure in pounds per square inch (psig) is converted to kPa equivalent by multiplying by 6.895.

SUS is an abbreviation for "Saybolt Universal Seconds", in which the viscosity of a fluid is quoted in seconds.

sm$^3$ stands for m$^3$ at standard conditions (i.e. 0°C and OkPa gauge).

μ-STYRAGEL (or micro-Styragel) is a commercially-available gel chromatography column packing used in some chromatography columns obtained from the Waters Scientific Company.

## Claims

1. A method for recovering dewaxing aid in an undegraded form from a mixture of precipitated wax-dewaxing aid produced by chilling waxy hydrocarbon oil in the presence of dewaxing aid to yield precipitated wax-dewaxing aid mixture which is then separated from said chilled oil, the dewaxing aid recovery method comprising heating the separated, precipitated wax-dewaxing aid mixture to liquefy said mixture and selectively permeating said liquefied wax through a semi-permeable membrane under pressure yielding a wax permeate and an undegraded dewaxing aid retentate, the semipermeable membrane being of cellulose butyrate, cellulose propionate, cellulose ethers, vulcanized or unvulcanized gum rubber and latex, polycarbonate, polyester, polyethylene, polybutadiene, polytetrafluorethylene, polystyrene, butadiene-styrene copolymers, isoprene-isobutene copolymers, polyacrylonitrile, crosslinked or vulcanized organopolysiloxanes, polypentaerythritol, ethylenepropylene copolymers, polyvinyl alcohol, nitrocellulose, polyisoprene, butadieneacrylonitrile copolymers and poly-2-chlorobutadiene, wherein the semi-permeable membrane has an average pore size in the range of from 500 to 2,000Å (500 x 10$^{-10}$m to 2000 x 10$^{-10}$m), except that polycarbonate membranes have pore sizes up to 1000Å (100nm), and wherein the dewaxing aid has a molecular weight in the range of from about 1,000 to about 1,000,000, preferably in the range of from about 200,000 to about 500,000.

2. A method as in claim 1 in which the waxy hydrocarbon oil is chilled in the presence of dewaxing aid and dewaxing solvent, and a mixture comprising precipitated wax and dewaxing aid is then separated from chilled oil and dewaxing solvent.

3. The method of claim 2 wherein the dewaxing solvent is selected from $C_2$-$C_{10}$ alkane, alkene or alkyne hydrocarbons, $C_3$-$C_6$ ketones, aromatic hydrocarbons, halogenated hydrocarbons, mixtures of $C_3$-$C_6$ ketones and aromatic hydrocarbons and mixtures of $C_3$-$C_6$ ketones and $C_2$-$C_6$ alkane, alkene or alkyne hydrocarbons.

4. The method of any one of claims 1 to 3 wherein the dewaxing aid comprises of one, or a mixture of more than one, of materials selected from condensation polymers of chlorinated paraffins and naphthalenes, polyalkylacrylates, polyalkylmethacrylates, alpha-olefin copolymers, ethylenevinyl acetate copolymers, alkyl fumarate-vinylacetate copolymers, polyethylene oxides, polyvinylacetates, polyvinylpyrrolidones, polyisobutylenes, polybutadiene, polystyrene-butadiene copolymers, alkali metal stearates, polyalkylene glycols, and fatty acid glycerides.

5. The method of any one of claims 1 to 4 wherein the content of dewaxing aid in the wax or dewaxed oil fed to the membrane separation process is in the range of from 0.001 to 50% by weight.

6. The method as in any one of claims 1 to 5 wherein the wax which is separated from the chilled oil contains from 0.10 to 85 percent by weight of oil.

7. The method of any one of claims 1 to 6 wherein at least some of the retentate containing recovered dewaxing aid is recycled to the dewaxing process for contacting with additional portions of waxy hydrocarbon oil.

## Patentansprüche

1. Verfahren zur Rückgewinnung von Entparaffinierungshilfsmittel in einer nicht abgebauten Form aus einer Mischung von ausgefälltem Paraffin/Entparaffinierungshilfsmittel hergestellt durch Abkühlen von paraffinhaltigem Kohlenwasserstofföl in Gegenwart von Entparaffinierungshilfsmittel, um eine ausgefällte Paraffin/Entparaffinierungshilfsmittel-Mischung zu ergeben, die dann von dem abgekühlten Öl getrennt wird, wobei in dem Entparaffinierungshilfsmittelrückgewinnungsverfahren die abgetrennte ausgefällte Paraffin/Entparaffinierungsmittel-Mischung erwärmt wird, um die Mischung zu verflüssigen, und das verflüssigte Paraffin unter Druck selektiv durch eine semipermeable Membran geleitet wird, was ein Paraffinpermeat und ein nicht abgebautes Entparaffinierungshilfmittelretentet ergibt, wobei die semipermeable Membran aus Cellulosebutyrat, Cellulosepropionat, Celluloseethern, vulkanisiertem oder nicht vulkanisiertem Gummikautschuk und Latex, Polycarbonat, Polyester, Polyethylen, Polybutadien, Polytetrafluorethylen, Polystyrol, Butadien-Styrol-Copolymeren, Isopren-Isobuten-Copolymeren, Polyacrylnitril, vernetzten oder vulkanisierten Organopolysiloxanen, Polypentaerithrit, Ethylen-Propylen-Copolymeren, Polyvinylalkohol, Nitrocellulose, Polyisopren, Butadien-Acrylnitril-Copolymeren oder Poly-2-chlorbutadien besteht, wobei die semipermeable Membran eine durchschnittliche Porengröße im Bereich von 500 bis 2 000 Å (500 x $10^{-10}$ m bis 2 000 x $10^{-10}$ m) besitzt, außer daß Polycarbonatmembranen Porengrößen bis zu 1000 Å (100 nm) besitzen, und wobei das Entparaffinierungshilfsmittel ein Molekulargewicht im Bereich von etwa 1 000 bis etwa 1 000 000 und vorzugsweise im Bereich von etwa 200 000 bis etwa 500 000 besitzt.

2. Verfahren nach Anspruch 1, bei dem das paraffinhaltige Kohlenwasserstofföl in Gegenwart von Entparaffinierungshilfsmittel und Entparaffinierungslösungsmittel abgekühlt wird und eine Mischung, die ausgefälltes Paraffin und Entparaffinierungshilfsmittel umfaßt, dann von dem abgekühlten Öl und Entparaffinierungslösungsmittel abgetrennt wird.

3. Verfahren nach Anspruch 2, bei dem das Entparaffinierungslösungsmittel ausgewählt wird aus $C_2$ - $C_{10}$ Alkan-, Alken- oder Alkinkohlenwasserstoffen, $C_3$ - $C_6$ Ketonen, aromatischen Kohlenwasserstoffen, halogenierten Kohlenwasserstoffen, Mischungen von $C_3$ - $C_6$ Ketonen und aromatischen Kohlenwasserstoffen und Mischungen von $C_3$ - $C_6$ Ketonen und $C_2$ - $C_6$ Alkan-, Alken- oder Alkinkohlenwasserstoffen.

4. Verfahren nach einem der Ansprüche 1 bis 3, bei dem das Entparaffinierungshilfsmittel ein oder eine Mischung von mehr als einem Material, ausgewählt aus Kondensationspolymeren von chlorierten Paraffinen und Naphthalinen, Polyalkylacrylaten, Polyalkylmethacrylaten, $\alpha$-Olefin-Copolymeren, Ethylen-Vinylacetat-Copolymeren, Alkylfumarat-Vinylacetat-Copolymeren, Polyethylenoxiden, Polyvinylacetaten, Polyvinylpyrrolidonen, Polyisobutylenen, Polybutadien, Polystyrol-Butadien-Copolymeren, Alkalimetallstearaten, Polyalkylenglykolen und Fettsäureglyceriden umfaßt.

5. Verfahren nach einem der Ansprüche 1 bis 4, bei dem der Entparaffinierungshilfsmittelgehalt in dem Paraffin oder entparaffiniertem Öl, das dem Membrantrennungsverfahren zugeführt wird, im Bereich von 0,001 bis 50 Gew.% liegt.

6. Verfahren nach einem der Ansprüche 1 bis 5, bei dem das von dem abgekühlten Öl abgetrennte Paraffin 0,10 bis 85 Gew.% Öl enthält.

7. Verfahren nach einem der Ansprüche 1 bis 6, bei dem mindestens ein Teil des Retentats, das zurückgewonnenes Entparaffinierungsmittel enthält, zum Kontaktieren mit zusätzlichen Mengen paraffinhaltigen Rohlenwasserstofföls in das Entparaffinierungsverfahren rückgeführt wird.

**Revendications**

1. Procédé de récupération de l'adjuvant de déparaffinage,sous une forme non dégradée,à partir d'un mélange de cire de paraffine précipitée-adjuvant de déparaffinage,produit par refroidissement d'une huile hydrocarbonée paraffineuse,en présence de l'adjuvant de déparaffinage,ce qui donne un mélange précipité cire de paraffine-adjuvant de déparaffinage que l'on sépare ensuite de ladite huile refroidie,le procédé de récupération de l'adjuvant de déparaffinage comprenant le chauffage du mélange précipité et séparé cire de paraffine-adjuvant de déparaffinage pour liquéfier ledit mélange et faire passer par perméation sélective ladite cire de paraffine liquéfiée ,sous pression à travers une membrane semi-perméable ,ce qui donne un produit de perméation ( cire de paraffine) et un adjuvant, retenu non dégradé,de déparaffinage ( rétentat) ,la membrane semi perméable étant en butyrate de cellulose ,en propionate de cellulose , en éthers de la cellulose ,en caoutchouc gomme vulcanisé ou non vulcanisé ou en latex,en polycarbonate,en polyester,en polyéthylène, en polybutadiène, en polytétrafluoroéthylè-

EP 0 154 746 B1

ne, en polystyrène, en copolymères butadiène-styrène, des copolymère d'isoprène-isobutène, en polyacrylonitrile , en organopolysiloxanes réticulés ou vulcanisés , en polypentaérytritol , en copolymères éthylène-propylène, en poly(alcool vinylique) , en nitrocellulose , en polyisoprène, en copolymères de butadiène-acrylonitrile ,et en poly(2-chlorobutadiène) , procédé dans lequel la membrane semi-perméable a une taille moyenne des pores de 500 x $10^{-10}$ m à 2 000 x $10^{-10}$ M (entre 500 et 2 000 Å )sauf que des membranes en polycarbonate ont des tailles de pores allant jusqu'à 100 nm (jusqu'à 1 000 Å ) et dans lequel l'adjuvant de déparaffinage a un poids moléculaire d'environ 1 000 à environ 1 000 000 , de préférence d'environ 200 000 à environ 500 000 .

2. Procédé selon la revendication 1 , dans lequel l'huile hydrocarbonée paraffineuse est refroidie en présence de l'adjuvant de déparaffinage et d'un solvant de déparaffinage, et l'on sépare ensuite,de l'huile et du solvant de déparaffinage refroidis,un mélange comprenant de la cire de paraffine et de l'adjuvant de déparaffinage précipités.

3. Procédé selon la revendication 2 ,dans lequel le solvant de déparaffinage est choisi parmi des hydrocarbures de type alcanes, alcènes ou alcynes en $C_2$ à $C_{10}$ , des cétones en $C_3$ à $C_6$ , des hydrocarbures aromatiques , des hydrocarbures halogénés , des mélanges de cétones en $C_3$ à $C_6$ et d'hydrocarbures aromatiques et des mélanges de cétones en $C_3$ à $C_6$ et d'hydrocarbures de type alcanes, alcènes ou alcynes en $C_2$ à $C_6$ .

4. Procédé selon l'une quelconque des revendications 1 à 3 ,dans lequel l'adjuvant de déparaffinage comprend une matière, ou un mélange de plus d'une matière,choisi(e) parmi des polymères de condensation de paraffines chlorées et de naphtalènes, des poly(acrylates d'alkyle ),des poly-(méthacrylates d'alkyle ) des copolymères d'alpha-oléfines , des copolymères éthylèneacétate de vinyle, des copolymères fumarate d'alkyle/acétate de vinyle ,des polyoxyéthylènes , des poly(acétate de vinyle) , des polyvinylpyrrolidones , des polyisobutylènes ,du polybutadiène , des copolymères polystyrène-butadiène , des stéarates de métaux alcalins , des polyalkylène-glycols , et des glycérides d'acides gras ;

5. Procédé selon l'une quelconque des revendications 1 à 4 , dans lequel la quantité de l'adjuvant de déparaffinage présente dans la cire de paraffine ou dans l'huile déparaffinée alimentant le procédé de séparation à l'aide d'une membrane est de 0,001 à 50% en poids.

6. Procédé selon l'une quelconque des revendications 1 à 5 , dans lequel la cire de paraffine qui est séparée de l'huile refroidie contient de 0,10 à 85 % en poids d'huile.

7. Procédé selon l'une quelconque des revendications 1 à 6 , dans lequel au moins une partie du rétentat contenant de l'adjuvant de déparaffinage récupéré est rscyclé vers les opérations du procédé de déparaffinage pour mise en contact avec des portions supplémantaires de l'huile hydrocarbonée paraffineuse .

17

# FIGURE 1

## DEWAXING AID RECOVERY BY SEMIPERMEABLE MEMBRANE IN A SOLVENT DEWAXING PROCESS

MAKEUP FRESH
DEWAXING AID
IF REQUIRED

8A

20A

9 — DEWAXING AID

RECYCLE OF
DEWAXING AID
ENRICHED STREAM

2 — WAXY OIL

4 — CHILLING ZONE

12

14 — WAX–OIL SEPARATION ZONE

20A

6

10 — DEWAXING SOLVENT

16

18

DEWAXING AID RICH WAX

RETENTATE — 20

PERMEATE — 22 — DWA FREE WAX

WAX STREAM
(WITH OR WITHOUT
DEWAXING SOLVENT)

MEMBRANE
SEPARATION
UNITS

24

DEWAXING AID RICH OIL

RETENTATE — 30

PERMEATE — 28 — DWA FREE OIL

DEWAXED OIL
(WITH OR WITHOUT
DEWAXING SOLVENT)

26

EP 0 154 746 B1

18

# FIGURE 2

## MEMBRANE RECOVERY OF DEWAXING AID IN PROPANE DEWAXING

FIGURE 3

WT. %
ACTIVE INGREDIENT
OF DEWAXING AID

MOLECULAR WEIGHT (BY POLYSTYRENE STANDARD)